# EUROPEAN PATENT APPLICATION

(11) **EP 4 841 904 A1**
(43) Date of publication of application: **18.11.2026**
(21) Application number: 24916381.7
(22) Date of filing: 22.08.2024
(51) Int. Cl.: H04B 7/06

(54) **CHANNEL STATE INFORMATION SENDING METHOD AND RECEIVING METHOD, COMMUNICATION APPARATUS, AND STORAGE MEDIUM**

(30) Priority: 12.01.2024 CN 202410056690
(71) Applicant: ZTE Corporation, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); LIU, Wenfeng, Shenzhen, Guangdong 518057 (CN); LI, Lun, Shenzhen, Guangdong 518057 (CN); LI, Yong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/113924
(87) International publication number: WO 2025/148327

(57) **Abstract**

Embodiments of the present invention provide a channel state information sending method and receiving method, a communication apparatus, and a storage medium. The sending method comprises: acquiring channel information; determining first channel state information and second channel state information on the basis of the channel information; acquiring third channel state information on the basis of all or part of the second channel state information; and sending the first channel state information and the third channel state information.

## Description

The present disclosure claims a priority to Chinese Patent Application No. 202410056690.6, and filed on January 12, 2024, the entire content of which is incorporated into herein by reference.

### TECHNICAL FIELD

The present disclosure relates to the field of communication technologies, and in particular, to a channel state information sending method and receiving method, a communication apparatus, and a storage medium.

### BACKGROUND

Multi-antenna technologies include multiple-input-multiple-output (MIMO), multi-transmission-node joint transmission (JT), and high-frequency beamforming, etc. Since multi-antenna technologies may significantly improve the performance of wireless communication systems, which are widely used in various radio communication technologies, such as the long term evolution (LTE) mobile communication network of the 4th generation mobile networks (4G), and the new radio (New Radio, NR) mobile communication network of the 5th generation mobile networks (5G). In future 6th generation mobile networks (6G), multi-antenna technologies are also widely concerned and researched.

### SUMMARY

The present disclosure provides channel state information sending and receiving methods, a communication apparatus, and a storage medium.

In a first aspect, the present disclosure provides a channel state information sending method, and the method includes:
acquiring channel information;
determining first channel state information and second channel state information according to the channel information;
acquiring third channel state information according to all or part of the second channel state information; and
sending the first channel state information and the third channel state information.

In a second aspect, the present disclosure provides a channel state information receiving method, and the method includes:
receiving first channel state information and third channel state information; and determining channel state information based on the first channel state information and the third channel state information, where the third channel state information is acquired according to all or part of second channel state information, and the second channel state information and the first channel state information are determined according to channel information.

In a third aspect, the present disclosure provides a communication apparatus, and the communication apparatus includes:
an acquiring module, configured to acquire channel information;
a first determining module, configured to determine first channel state information and second channel state information according to the channel information;
a second determining module, configured to acquire third channel state information according to all or part of the second channel state information; and
a sending module, configured to send the first channel state information and the third channel state information.

In a fourth aspect, the present disclosure provides another communication apparatus, and the communication apparatus includes:
a receiving module, configured to receive first channel state information and third channel state information; and
a third determining module, configured to determine channel state information according to the first channel state information and the third channel state information; where the third channel state information is acquired according to all or part of second channel state information, and the second channel state information and the first channel state information are determined according to channel information.

In a fifth aspect, a communication apparatus is provided, and includes: a processor and a memory; the memory has stored instructions executable by the processor; and the processor is configured to, upon executing the instructions, enable the communication apparatus to implement the method according to the first aspect or the second aspect.

In a sixth aspect, a computer readable storage medium is provided, and the computer readable storage medium has stored computer instructions, and the computer instructions, upon being executed on a computer, enable the computer to perform the method according to the first aspect or the second aspect.

In a seventh aspect, a computer program product containing computer instructions is provided, and the computer instructions, upon being executed on a computer, enable the computer to perform the method according to the first aspect or the second aspect.

### BRIEF DESCRIPTION OF THE DRAWINGS

The drawings are used to provide a further understanding for the technical solutions of the present disclosure, constitute a part of the specification, are used to explain the technical solutions of the present disclosure in conjunction with the embodiments of the present disclosure, and do not constitute a limitation on the technical solutions of the present disclosure.
FIG. 1 is a schematic diagram of an architecture of a communication system provided by the embodiments of the present disclosure.
FIG. 2 is a flow chart of a channel state information sending method provided by the embodiments of the present disclosure.
FIG. 3 is a flow chart of a method for determining third channel state information provided by the embodiments of the present disclosure.
FIG. 4 is a flow chart of another method for determining third channel state information provided by the embodiments of the present disclosure.
FIG. 5 is a flow chart of a channel state information receiving method provided by the embodiments of the present disclosure.
FIG. 6 is a schematic diagram of components of a communication apparatus provided by the embodiments of the present disclosure.
FIG. 7 is a schematic diagram of components of another communication apparatus provided by the embodiments of the present disclosure.
FIG. 8 is a structural schematic diagram of a communication apparatus provided by the embodiments of the present disclosure.

### DETAILED DESCRIPTION

The technical solutions in the embodiments of the present disclosure will be described clearly and completely below in conjunction with the drawings in the embodiments of the present disclosure, and obviously, the described embodiments are merely a part of the embodiments of the present disclosure, not all of the embodiments. Based on the embodiments in the present disclosure, all other embodiments obtained by those ordinary skilled without creative efforts shall fall within the protection scope of the present disclosure.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean three cases: only A, only B, and both A and B. In addition, "at least one" means one or more, and "multiple/plurality of" means two or more. Words, such as "first" and "second", do not limit the quantity and execution order, and the words, such as "first" and "second", also do not necessarily limit different items.

It should be noted that in the present disclosure, the words such as "exemplary/exemplarily" or "for example (e.g.)", are used to present an example, illustration, or explanation. Any embodiment or design scheme described with "exemplary/exemplarily" or "for example (e.g.)" in the present disclosure should not be construed as preferred or advantageous over other embodiments or design schemes. Rather, the usage of the words, such as "exemplary/exemplarily" or "for example (e.g.)", is intended to present relevant concepts in some manners.

Currently, in wireless communication systems based on multi-antenna technologies, various advanced technologies may be adopted to obtain accurate channel state information (CSI). Taking an example of an artificial intelligence (AI) technology, it may improve the accuracy of acquiring channel state information. However, the extent to which AI may improve the accuracy of channel state information depends on the complexity of the model and also on the sparsity of the channel information, the sparser the channel information, the better the compression by AI, thereby improving the accuracy of obtaining channel state information under a certain overhead. In addition, it is also necessary to determine whether to further improve the accuracy of CSI based on actual requirements. For example, some users need to be paired with other users for multi-user MIMO, so the requirement for CSI accuracy is higher; some users have good quantization accuracy for part of the channel information, but the quantization accuracy for some part of the channel information needs to be higher, such as channel information on part of time-frequency resources, or channel information on part of ports, or channel information on part of layers that needs to further improve CSI accuracy. To give full play to the performance of multi-antenna technologies, a communication node needs to obtain relatively accurate channel state information. As a number of antennas increases, in order to obtain more accurate channel state information, the overhead of reference signals and/or CSI feedback also increases. In summary, studying how to improve the accuracy of channel state information obtained by the communication node under acceptable feedback overhead, so as to give full play to the performance of multiple antennas, is a technical problem urgently to be solved in related fields.

In view of this, the present disclosure provides a channel state information sending method, and the method includes: acquiring channel information; determining first channel state information and second channel state information according to the channel information; and sending the first channel state information and third channel state information generated based on the second channel state information. Herein, generally, the second channel state information may reflect a gap between the first channel state information and the channel information, or the extent to which the first channel state information reflects the characterization accuracy of the channel information, if the characterization accuracy still fails to satisfy the requirement (the gap between the first channel state information and the channel information is large, or the similarity is low), or if the characterization accuracy on part of ports, part of layers, or part of time-frequency resources is still insufficient (the gap between the first channel state information and the channel information on the part of ports, the part of layers, or the part of time-frequency resources is large, or the similarity is low), the second channel state information is further quantized and fed back, thereby improving the accuracy of the transmitted channel state information.

Correspondingly, the present disclosure further provides a channel state information receiving method, and the method includes: receiving first channel state information and third channel state information; where the first channel state information is determined based on channel information, the third channel state information is generated based on second channel state information, and the second channel state information is determined based on the channel information and the first channel state information.

The technical solutions provided in the embodiments of the present disclosure may be applied to various mobile communication networks, for example, mobile communication networks adopting the 4th generation mobile communication technology, new radio (New Radio, NR) mobile communication networks adopting the fifth generation mobile communication technology (5th generation mobile networks, 5G), future mobile communication networks (including but not limited to various 6th generation mobile communication technologies (6G)), or multiple communication fusion systems, etc., which are not limited to the embodiments of the present disclosure.

A network architecture of a mobile communication network (including but not limited to 3G, 4G, 5G and future mobile communication networks) in the embodiments of the present disclosure may include network side devices (for example, including but not limited to a base station) and receiving side devices (for example, including but not limited to a terminal). Also, it should be understood that, in the example, in a downlink, a first communication node (also referred to as a first communication node device) may be a base station side device, and a second communication node (also referred to as a second communication node device) may be a terminal side device; certainly, in an uplink, the first communication node may also be a terminal side device, and the second communication node may also be a base station side device. In a case where two communication nodes are in a device-to-device communication, both the first communication node and the second communication node may be base stations or terminals. The first communication node and the second communication node may be referred to as a first node and a second node for short, respectively.

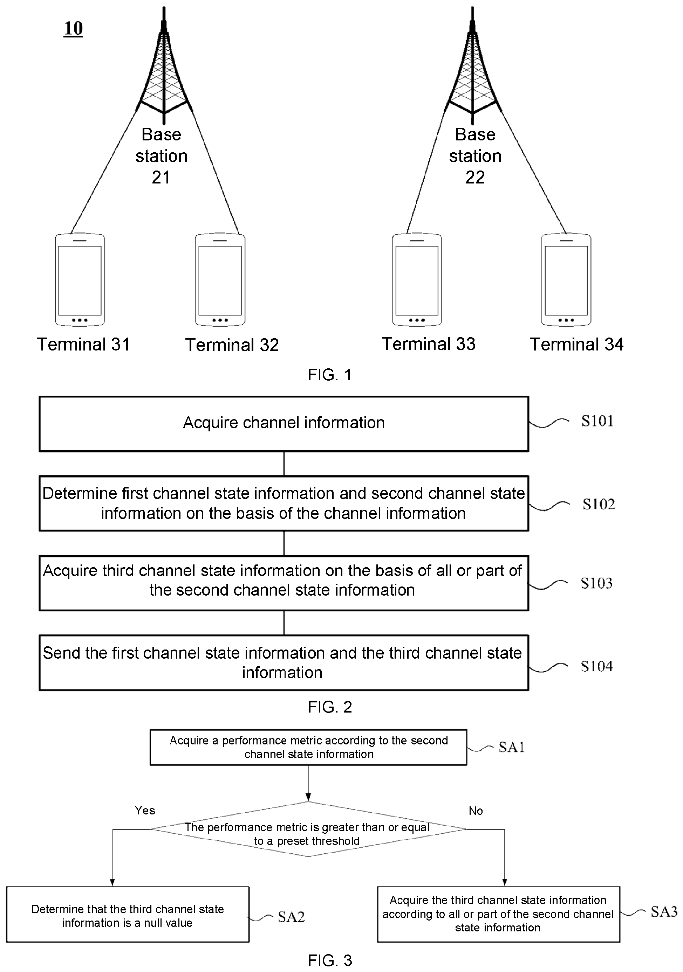

Exemplarily, taking an example in which the network side device is a base station and the receiving side device is a terminal, FIG. 1 shows a schematic diagram of an architecture of a communication system provided by the embodiments of the present disclosure. As shown in FIG. 1, a communication system 10 includes a plurality of base stations (e.g., base station 21 and base station 22) and a plurality of terminals (e.g., terminal 31, terminal 32, terminal 33, and terminal 34). The plurality of base stations and the plurality of terminals may be communicatively connected. A base station may provide network services to terminals in a cell, and may also provide network services to terminals in a plurality of cells at the same time.

In some embodiments, a base station may be a base station or an evolutional base station (evolutional node B, eNB or eNodeB) in long term evolution (LTE), long term evolution advanced (LTEA), a base station device in a 5G network, or a base station in a future communication system, etc., the base station may include various macro base stations, micro base stations, home base stations, wireless remote, reconfigurable intelligent surfaces (RISs), routers, wireless fidelity (WIFI) devices, or various network side devices in a primary cell and a secondary cell, etc.

In some embodiments, the terminal may be a device with a wireless transceiving function, may be deployed on land (including indoors or outdoors, handheld, worn or in-vehicle); may also be deployed on the water (e.g., on a ship, etc.); may also be deployed in the air (e.g., on an airplane, a balloon and a satellite, etc.). The terminal may be a mobile phone, a pad, a computer with a wireless transceiver function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenarios. The terminal sometimes may also be referred to as a user, a user equipment (User Equipment, UE), an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

In some embodiments, higher-layer signaling includes but is not limited to radio resource control (RRC) and media access control control element (MAC CE). The physical layer signaling may also be transmitted between the base station and the terminal, for example, the base station and the terminal may transmit a downlink physical layer signaling on a physical downlink control channel (PDCCH), or transmit an uplink physical layer signaling on a physical uplink control channel (PUCCH).

In some embodiments, indicators/indications of various parameters may also be referred to as indices or identifiers (IDs), and concepts of indicator/indication, identifier and index are equivalent. For example, a resource identifier of a wireless system may also be referred to as a resource indication or a resource index. The resource index of the wireless system includes, but is not limited to one of: an indicator corresponding to a reference signal resource, a reference signal resource group, a reference signal resource configuration, a channel state information (Channel State Information, CSI) report, a CSI report set, a terminal, a base station, a panel, a neural network, a sub-neural network, a neural network layer, a precoding matrix, a beam, a transmission mode, a sending mode, a receiving mode, a module, a model, a functional module, a function, etc. The base station may indicate an indicator of a resource or a group of resources to a terminal via various higher-layer signalings or physical layer signalings. The terminal may also feed back an indicator of a resource or a group of resources to the base station via higher-layer signaling and/or physical layer signaling.

In some embodiments, transmission includes sending or receiving, for example, sending data or signals, or receiving data or signals.

In some embodiments, in order to calculate channel state information or perform channel estimation, mobility management, positioning, etc., a base station or a terminal needs to send a reference signal (RS). The reference signal includes, but is not limited to, a channel state information reference signal (CSI-RS), the channel state information reference signal include a zero power CSI-RS (ZP CSI-RS) and a non-zero power CSI-RS (NZP CSI-RS), channel state information-interference measurement (CSI-IM), a sounding reference signal (SRS), a synchronization signal block (SSB), a physical broadcast channel (PBCH), and a synchronization signal block/physical broadcast channel (SSB/PBCH). The NZP CSI-RS may be used to measure a channel or measure interference, the CSI-RS may be used for tracking and may be referred to as a tracking reference signal (CSI-RS for Tracking, TRS), the CSI-IM is generally used to measure interference, and SRS is used to measure an uplink channel. In addition, a set of resource elements (REs) included in a time-frequency resource used for transmitting a reference signal is referred to as a reference signal resource, for example, CSI-RS resource, SRS resource, CSI-IM resource, and SSB resource. In the present disclosure, the SSB includes a synchronization signal block and/or a physical broadcast channel.

In some embodiments, in order to save signaling overhead, etc., a plurality of reference signal resources may be divided into a plurality of sets (for example, a CSI-RS resource set, a CSI-IM resource set, and an SRS resource set). The reference signal resource set includes at least one reference signal resource, and a plurality of reference signal resource sets may come from a same reference signal resource setting (for example, a CSI-RS resource setting and an SRS resource setting, where the CSI-RS resource setting may be merged with a CSI-IM resource setting, and both are referred to as a CSI-RS resource setting), to configure parameter information.

In some embodiments, a time instance represents a time period, for example, it may be a slot, such as a slot, a mini slot, or a symbol group. A slot or mini slot may include at least one symbol. Herein, the time instance refers to a time unit in a subframe or frame or slot, and the unit may be millisecond, microsecond, nanosecond, second, etc. The symbol may include, but is not limited to, an orthogonal frequency division multiplexing (OFDM) symbol, a single-carrier frequency division multiple access (SC-FDMA) symbol, an orthogonal frequency division multiple access (OFDMA) symbol, or symbols corresponding to various new waveforms in future communication systems, etc.

In some embodiments, a minimum transmission unit for carrying a modulation symbol is a resource element (RE), the RE is a minimum time-frequency resource for transmitting a modulation symbol, which includes a radio resource on a frequency-domain subcarrier and a symbol. The radio resource consisting of at least one symbol and a plurality of subcarriers constitute a physical resource block, for example, symbols with consecutive indices from 1 to 14 and 12 subcarriers with consecutive indices constitute a physical resource block (PRB). A reference signal pattern includes at least one RE, and a reference signal is transmitted only on REs pre-configured by the base station, which is referred to as a reference signal pattern, for example, a DMRS pattern, a CSI-RS pattern, or an SRS pattern, etc.

The resource block described herein may be a physical resource block, or may also be a radio communication resource including one or more frequency-domain resources, and/or one or more time-domain resources, and/or one or more code-domain resources. The resource block may be used to transmit data and/or signals.

In some embodiments, a communication node may select an information processing mode to process the obtained information (e.g., channel information, channel matrix information, time-domain channel information, frequency-domain channel information, angle information, position information), to obtain an information processing result. The processing result includes one or more pieces of the channel state information, or one or more pieces of the beam parameter information.

In some embodiments, the above information processing mode may be a traditional information processing mode or various advanced information processing modes. The advanced information processing modes include but are not limited to an information processing mode based on artificial intelligence (AI).

In some embodiments, artificial intelligence includes devices, components, software, modules, models, functional modules, functional functions, etc., with self-learning capabilities, such as machine learning (ML), deep learning, reinforcement learning, transfer learning, deep reinforcement learning, meta learning, etc. In some embodiments, artificial intelligence is implemented by an artificial intelligence network (or referred to as a neural network), where the neural network includes a plurality of layers, each layer includes at least one node, and in an example, the neural network includes an input layer, an output layer, and at least one hidden layer. An artificial intelligence network may be implemented by a model, where the model may include a neural network model, and the neural network model includes a neural network model structure and/or a neural network model parameter, where the neural network model structure may be referred to as a model structure for short, and the neural network model parameter may be referred to as a network parameter or a model parameter for short. The model structure defines an architecture of the network, such as a number of layers of the neural network, a size of each layer, an activation function, a connection situation, a size of a convolution kernel and a convolution step, a convolution type, and the network parameter is a value and/or biases and their values of each network layer in the neural network model. A model structure may correspond to a plurality of different sets of neural network model parameters, to adapt to different scenarios. The parameters of the model are obtained by online training or offline training. For example, the neural network model is trained to obtain the parameters of the model, by inputting at least one sample and a label.

Exemplarily, a sample includes N features (Features) and M labels (Labels), where N is a positive integer, and M is an integer greater than or equal to 0. In addition, a plurality of samples may constitute a data set. In an example, a sample includes a feature and a label, for example, a sample in supervised learning. In another example, a sample has only one feature and no label, for example, a sample in unsupervised learning. In another example, a sample has a plurality of features and a label, such as a sample in supervised learning with a plurality of inputs and a single output. In yet another example, a sample includes a feature and a plurality of labels, for example, a sample in supervised learning with a single input and a plurality of outputs.

In some embodiments, the model means that a data flow between an original input of samples and an output target goes through a plurality of linear components or non-linear components. The above model includes a neural network model, a non-artificial intelligence module for processing information or its corresponding model, and a functional component or function that maps (including linear mapping and nonlinear mapping) input information to output information. In some embodiments, each model corresponds to a model indicator (Model ID) or a model identity (Model ID). In some embodiments, the model identity may also have one of the following other equivalent names or concepts: model index, first identifier, function identifier, model indicator, etc.

Exemplarily, the model includes a model structure (Model structure) and model parameters (Model parameters). For example, the model is a neural network model, and the neural network model includes a neural network model structure (Model structure) and neural network model parameters (Model parameters), which are respectively used to describe a structure of the neural network and parameter values of the neural network. A neural network model structure may correspond to a plurality of neural network model parameters, i.e., the neural network model structure may be the same, but the corresponding neural network model parameter values may be different.

In some examples, a communication node sends a function (functionality) or a function index to another communication node to inform the other communication node that the function may be used to process information. The function may also be referred to as a functional module, a functional function, a functional mapping, etc., and is used to describe features or types of information processing modes. The types of information processing modes include a plurality of types, such as for positioning, beam management, CSI prediction, beam prediction, channel estimation. The feature of the information processing mode includes but is not limited to a scenario description adapted to the functionality, an input parameter description, an output parameter description, and which category of measurement parameters the output result belongs to. A function corresponds to one or more information processing modes, and each information processing mode may be implemented by one or more models. Alternatively, a function may be implemented by one or more models.

In some examples, in order to better transmit data or signals, the base station or terminal needs to acquire a measurement parameter, and the measurement parameter may include channel state information or other parameters used to characterize a channel. The channel state information may include at least one of: a channel state information-reference signal resource indicator (CSI-RS resource indicator, CRI), a synchronization signal block resource indicator (SSBRI), layer 1 reference signal received power (L1 reference signal received power, L1-RSRP or RSRP), differential RSRP, layer 1 signal-to-interference-plus-noise ratio (L1 signal-to-interference noise ratio, L1-SINR or SINR), differential L1-SINR, reference signal received quality (RSRQ), L1-RSRQ, differential RSRQ, a channel quality indicator (CQI), a precoding matrix indicator (PMI), a layer indicator (LI), a rank indicator (RI), or precoding information. The precoding information includes first type of precoding information, for example, codebook-based precoding information (for example, an N-antenna codebook in LTE, where N=2, 4, 8, 12, 16, 24, 32, etc., a type I codebook, a type II codebook, a type II port selection codebook, an enhanced type II codebook, an enhanced type II selection codebook, and a Further enhanced type II selection codebook in NR), and herein, the precoding matrix indicator is a type of codebook-based precoding information. The precoding information further includes a non-codebook-based implementation, for example, second type of precoding information (for example, precoding information obtained based on advanced information processing technologies such as AI).

In some examples, channel information is information that is obtained according to a reference signal (e.g., CSI-RS) and used for describing channel environment between communication nodes, such as a time-domain channel matrix, a frequency-domain channel matrix. In some examples, the channel information is a complex matrix, and a size of the channel matrix is related to a number Nt of transmitting antennas, a number Nr of receiving antennas, and a resource element (Resource Element, RE). For example, there is at least one Nr*Nt channel matrix on a physical resource block (Physical Resource Block).

In the embodiments of the present disclosure, feedback CSI may also be referred to as transmitting CSI or sending CSI, for example, carrying the channel state information on an uplink transmission resource for feedback or transmission. The uplink transmission resource and the corresponding CSI are both indicated by a channel state information report. In an example, transmitting a CSI report refers to transmitting a content that needs to be transmitted as indicated in the CSI report, including but not limited to channel state information, where transmitting here includes sending or receiving, and may also be replaced by feeding back a CSI report or receiving a CSI report.

In some embodiments, the antenna is a physical antenna. In some examples, the antenna is a logical antenna. In some examples, concepts of a port, an antenna, an antenna port, a reference signal port, and a pilot port are interchangeable. In some examples, the antenna is a sending antenna. In some examples, the antenna is a receiving antenna.

In some examples, the antenna includes an antenna pair of a sending antenna and a receiving antenna. In some examples, the antenna may be a uniform linear array. In some examples, the antenna is a uniform planar array, for example, including array elements/antennas with Ng rows and Mg columns, where Ng and Mg are positive integers. In some examples, the antenna is a uniform circular array. In some examples, the antenna may be a non-uniform linear array. In some examples, the antenna is a non-uniform planar array. In some examples, the antenna is a non-uniform circular array. In some examples, the antenna may be a special-shaped antenna. In some examples, the antenna array may be a spatial array, such as a cuboid array, a cube array, a spherical array, a sphere array, a parabolic array.

As shown in FIG. 2, the present disclosure provides a channel state information sending method, applied to a sending end device, and the method includes: S101 to S104 as follows.

In S101, channel information is acquired.

The channel information may include at least one of: time-domain channel information, frequency-domain channel information, one or more eigenvectors of a correlation matrix corresponding to the time-domain channel information, one or more singular vectors of the correlation matrix corresponding to the time-domain channel information (for example, singular vectors obtained by performing singular value decomposition on the correlation matrix corresponding to the time-domain channel information), one or more eigenvectors of a correlation matrix corresponding to the frequency domain channel information, one or more singular vectors of the correlation matrix corresponding to the frequency domain channel information (for example, singular vectors obtained by performing singular value decomposition on the correlation matrix corresponding to the frequency domain channel information), or a channel vector or channel matrix of other forms processed through the time-domain channel information or the frequency domain channel information and used to characterize channel conditions between different communication nodes.

Exemplarily, in a wireless communication system, take an example in which a first communication node is a base station and a second communication node is a terminal. The base station sends a reference signal, and the terminal receives the reference signal sent from the base station and measures the reference signal, to obtain channel information H. The wireless communication system may include one or more base stations and one or more terminals. In addition, each base station may include a plurality of antennas, and each terminal may include one or more antennas. Thus, the terminal may determine channel state information according to the channel information H. Exemplarily, the channel state information here may be a precoding matrix, or a codebook related to the channel information H, or a result obtained after processing the H by a linear method or nonlinear method, such as an output result obtained after passing through an encoder of AI, and in some examples, if the channel state information is obtained through an AI method, a decoder is also required at the base station side to further process the channel state information, to acquire the channel information at the base station side.

In S102, first channel state information and second channel state information are determined according to the channel information.

In some embodiments, the first channel state information may be determined according to the acquired channel information. Further, the second channel state information is determined according to the channel information and/or the first channel state information.

In some embodiments, the first channel state information and the second channel state information may also be determined directly according to the acquired channel information.

Exemplarily, in the wireless communication system, a terminal may measure a reference signal sent from a base station and obtain channel information, and further, the terminal may also determine a channel state information report to be sent to the base station based on the channel information, for example, the channel state information report may include the above first channel state information. The base station may perform scheduling, resource allocation, precoding processing on to-be-transmitted data or signals, etc., for the terminal according to the received channel state information, so as to implement efficient and reliable data transmission in the wireless communication system.

In an example, a terminal may select a codeword of the first channel state information in a preset codebook set based on the channel information H, for example, the selected codeword is a codeword with a relatively high correlation with the H, or a codeword with a relatively high signal to interference plus noise ratio (SINR), etc. In addition, the codebooks in the codebook set may include a Type I codebook, a Type II codebook, an ETypeII codebook, a Fetype II codebook, etc. In an example, the terminal may transmit the obtained first channel state information through a CSI report.

In some embodiments, the first channel state information includes L layers of first channel state information, L is a positive integer, and the first channel state information satisfies at least one of:
a number of quantization bits of first channel state information corresponding to at least one layer among the L layers being greater than or equal to a number of quantization bits of first channel state information corresponding to other layers;
a length of a frequency-domain basis vector of the first channel state information corresponding to at least one layer among the L layers being greater than or equal to a length of a frequency-domain basis vector of the first channel state information corresponding to other layers;
a number of frequency-domain basis vectors of the first channel state information corresponding to at least one layer among the L layers being greater than or equal to a number of frequency-domain basis vectors of the first channel state information corresponding to other layers;
a length of a time-domain basis vector of the first channel state information corresponding to at least one layer among the L layers being greater than or equal to a length of a time-domain basis vector of the first channel state information corresponding to other layers;
a number of time-domain basis vectors of the first channel state information corresponding to at least one layer among the L layers being greater than or equal to a number of time-domain basis vectors of the first channel state information corresponding to other layers;
a length of a spatial-domain basis vector of the first channel state information corresponding to at least one layer among the L layers being greater than or equal to a length of a spatial-domain basis vector of the first channel state information corresponding to other layers; or
a number of spatial-domain basis vectors of the first channel state information corresponding to at least one layer among the L layers being greater than or equal to a number of spatial-domain basis vectors of the first channel state information corresponding to other layers.

In an example, the first channel state information includes L layers, and each layer corresponds to a data stream. A quantization bit of the first channel state information corresponding to a layer among the L layers is greater than or equal to a quantization bit of the first channel state information corresponding to another layer among the L layers. For example, the L layers include a first layer and a second layer, X bits are adopted to quantize first channel state information corresponding to the first layer, Y bits are adopted to quantize first channel state information corresponding to the second layer, and X>=Y. X and Y are both positive integers.

In another example, the first channel state information includes L layers, and each layer corresponds to a data stream. A length of a frequency-domain basis vector of first channel state information corresponding to a layer among the L layers is greater than or equal to a length of a frequency-domain basis vector of first channel state information corresponding to another layer among the L layers. For example, the L layers include a first layer and a second layer, each subband in the first layer corresponds to X physical resource blocks (PRBs), and each subband in the second layer corresponds to Y PRBs. Since X>=Y, under a same bandwidth, the second layer has more corresponding frequency-domain subbands, and thus the frequency-domain basis vector is longer.

In yet another example, the first channel state information includes L layers, and each layer corresponds to a data stream. A number of frequency-domain basis vectors of first channel state information corresponding to a layer among the L layers is greater than or equal to a number of frequency-domain basis vectors of first channel state information corresponding to another layer among the L layers.

In yet another example, the first channel state information includes L layers, and each layer corresponds to a data stream. A length of a time-domain basis vector of first channel state information corresponding to a layer among the L layers is greater than or equal to a length of a time-domain basis vector of first channel state information corresponding to another layer among the L layers.

In yet another example, the first channel state information includes L layers, and each layer corresponds to a data stream. A number of time-domain basis vectors of first channel state information corresponding to a layer among the L layers is greater than or equal to a number of time-domain basis vectors of first channel state information corresponding to another layer among the L layers.

In yet another example, the first channel state information includes L layers, and each layer corresponds to a data stream. A length of a spatial-domain basis vector of first channel state information corresponding to a layer among the L layers is greater than or equal to a length of a spatial-domain basis vector of first channel state information corresponding to another layer among the L layers.

In yet another example, the first channel state information includes L layers, and each layer corresponds to a data stream. A number of spatial-domain basis vectors of first channel state information corresponding to a layer among the L layers is greater than or equal to a number of spatial-domain basis vectors of first channel state information corresponding to another layer among the L layers.

In some embodiments, the second channel state information may be determined according to the channel information and the first channel state information.

In some embodiments, the second channel state information may be determined according to part of the channel information. For example, channel information corresponding to part of layers and/or channel information on part of ports and/or channel information on part of resource blocks is determined as the second channel state information.

In some embodiments, the second channel state information may be determined according to part of the first channel state information. For example, first channel state information corresponding to part of layers and /or first channel state information on part of ports and/or first channel state information on part of resource blocks is determined as the second channel state information.

In some embodiments, the second channel state information may be determined according to a difference between the channel information and the first channel state information. Exemplarily, the second channel state information is a difference between the channel information H and the first channel state information C1, for example, H-C1. Alternatively, part of the second channel state information is a difference between the channel information H and part of the first channel state information C1. In some examples, the difference is a matrix subtraction of a matrix H used to describe the channel information and a channel matrix C1 used to describe the first channel state information. In some examples, the difference is a subtraction of corresponding elements of a matrix H used to describe the channel information and a channel matrix C1 used to describe the first channel state information. In some examples, the second channel state information is obtained after further preprocessing according to the difference between the channel information H and the first channel state information C1. The preprocessing includes, but is not limited to, the approaches of the following embodiments: in an example, an absolute value of the difference is used as the second channel state information; in an example, the difference is used as the second channel state information after normalization processing; in an example, a real part and an imaginary part are respectively extracted from a complex number of the difference and used as the second channel state information and in an example, the difference is quantized and then used as the second channel state information.

Exemplarily, the base station or the terminal may improve the accuracy of the transmitted channel state information according to the needs of actual scenarios. Thus, in addition to feeding back the first channel state information to the base station, the terminal may also feed back other possible information about channel conditions to the base station, such as the second channel state information in the present disclosure or the third channel state information determined based on the second channel state information.

It should be noted that, the terminal determines the second channel state information and feeds back the first channel state information and the third channel state information determined based on the second channel state information to the base station. Since the second channel state information may be determined based on the difference between the first channel state information and the channel information, this difference corresponds to a performance metric and if the performance metric is relatively large, it represents that the first channel information cannot well characterize the channel information, and it is necessary to further feed back the third channel state information. Thus, based on the first channel state information and the third channel state information, the channel information may be more accurately reflected, that is, the accuracy of the transmitted channel state information may be improved.

In S103, third channel state information is acquired according to all or part of the second channel state information.

Exemplarily, to improve the accuracy of the transmitted channel state information, the terminal may further acquire the third channel state information according to the all or part of the second channel state information and a corresponding information processing mode.

In some embodiments, the third channel state information includes M layers of third channel state information, M is a positive integer, and the third channel state information satisfies at least one of:
a number of quantization bits of third channel state information corresponding to at least one layer among the M layers being greater than or equal to a number of quantization bits of third channel state information corresponding to other layers;
a length of a frequency-domain basis vector of the third channel state information corresponding to at least one layer among the M layers being greater than or equal to a length of a frequency-domain basis vector of the third channel state information corresponding to other layers;
a number of frequency-domain basis vectors of the third channel state information corresponding to at least one layer among the M layers being greater than or equal to a number of frequency-domain basis vectors of the third channel state information corresponding to other layers;
a length of a time-domain basis vector of the third channel state information corresponding to at least one layer among the M layers being greater than or equal to a length of a time-domain basis vector of the third channel state information corresponding to other layers;
a number of time-domain basis vectors of the third channel state information corresponding to at least one layer among the M layers being greater than or equal to a number of time-domain basis vectors of the third channel state information corresponding to other layers;
a length of a spatial-domain basis vector of the third channel state information corresponding to at least one layer among the M layers being greater than or equal to a length of a spatial-domain basis vector of the third channel state information corresponding to other layers; or
a number of spatial-domain basis vectors of the third channel state information corresponding to at least one layer among the M layers being greater than or equal to a number of spatial-domain basis vectors of the third channel state information corresponding to other layers.

In an example, the third channel state information includes M layers, and each layer corresponds to a data stream. A quantization bit of the third channel state information corresponding to a layer among the M layers is greater than or equal to a quantization bit of the third channel state information corresponding to another layer among the M layers. For example, the M layers include a first layer and a second layer, the first layer adopts P bits to quantize the third channel state information corresponding to the first layer, and the second layer adopts Q bits to quantize the third channel state information corresponding to the second layer, and P>=Q. P and Q are both positive integers.

In another example, the third channel state information includes M layers, and each layer corresponds to a data stream. A length of a frequency-domain basis vector of third channel state information corresponding to a layer among the M layers is greater than or equal to a length of a frequency-domain basis vector of third channel state information corresponding to another layer among the M layers. For example, the M layers include a first layer and a second layer, each subband in the first layer corresponds to P physical resource blocks (PRBs), and each subband in the second layer corresponds to Q PRBs. Since P>= Q, under a same bandwidth, the second layer has more corresponding frequency-domain subbands, and thus the frequency-domain basis vector is longer.

In yet another example, the third channel state information includes M layers, and each layer corresponds to a data stream. A number of frequency-domain basis vectors of third channel state information corresponding to a layer among the M layers is greater than or equal to a number of frequency-domain basis vectors of third channel state information corresponding to another layer among the M layers.

In yet another example, the third channel state information includes M layers, and each layer corresponds to a data stream. A length of a time-domain basis vector of third channel state information corresponding to a layer among the M layers is greater than or equal to a length of a time-domain basis vector of third channel state information corresponding to another layer among the M layers.

In yet another example, the third channel state information includes M layers, and each layer corresponds to a data stream. A number of time-domain basis vectors of third channel state information corresponding to a layer among the M layers is greater than or equal to a number of time-domain basis vectors of third channel state information corresponding to another layer among the M layers.

In yet another example, the third channel state information includes M layers, and each layer corresponds to a data stream. A length of a spatial-domain basis vector of third channel state information corresponding to a layer among the M layers is greater than or equal to a length of a spatial-domain basis vector of third channel state information corresponding to another layer among the M layers.

In yet another example, the third channel state information includes M layers, and each layer corresponds to a data stream. A number of spatial-domain basis vectors of third channel state information corresponding to a layer among the M layers is greater than or equal to a number of spatial-domain basis vectors of third channel state information corresponding to another layer among the M layers.

Generally, a number of layers M corresponding to the third channel state information is less than or equal to a number of layers N corresponding to the first channel state information.

In a possible implementation, the third channel state information may be determined according to a first information processing mode and the all or part of the second channel state information.

In some embodiments, the first information processing mode is a linear processing mode.

In some embodiments, the first information processing mode may include any one of: a singular value decomposition (SVD)-based mode, an eigenvalue decomposition-based mode, a projection-based mode, or a mode for generating a codeword based on at least one discrete Fourier transform (DFT) vector.

Exemplarily, the terminal may perform linear processing on the second channel state information, to obtain the third channel state information, for example, SVD decomposition may be performed on the second channel state information, to obtain one or more singular vectors of the second channel state information, and further, the one or more singular vectors, or codewords corresponding to the one or more singular vectors, may be fed back to the base station. The method for acquiring the channel state information based on the eigenvalue decomposition mode and the projection mode, etc., is similar to the method for acquiring the channel state information based on the SVD mode. The codeword-based generation mode may be determined based on a codebook generated by DFT vectors, such as a codebook generated based on a plurality of DFT vectors, or a codebook generated based on other modes. In addition, each codebook includes one or more codewords. Each codeword may be a matrix or a vector.

In another possible implementation, the third channel state information may be determined according to a second information processing mode and the all or part of the second channel state information.

In some embodiments, the second information processing mode is a nonlinear processing mode, and includes any one of: an artificial intelligence-based nonlinear processing mode, a dirty paper coding-based nonlinear processing mode, a functionality-based nonlinear processing mode, a function-based nonlinear processing mode, a mapping-based nonlinear processing mode, or a model-based nonlinear processing mode.

Exemplarily, the terminal may perform nonlinear processing on the second channel state information, to obtain the third channel state information. For example, the terminal may input the second channel state information into a pre-trained AI model, and output information of the model may be used as the third channel state information. Alternatively, the terminal may process the second channel state information according to the dirty paper coding mode, to obtain the third channel state information. Other functionality-based nonlinear processing modes, the function-based nonlinear processing modes, the mapping-based nonlinear processing modes, and the model-based nonlinear processing modes which process the second channel state information into the third channel state information, are similar to the AI model-based method.

In some embodiments, the third channel state information may be acquired according to the part of the second channel state information.

In an example, the above part of the second channel state information includes second channel state information corresponding to part of layers.

Herein, the part of layers is determined according to at least one of: higher-layer signaling, evaluation information of the second channel state information, a signal-to-noise ratio, or a predefined layer. The predefined layer may be the first layer, a layer indicated by an LI, or other possible layers.

Exemplarily, in a case where only part of layers needs enhanced feedback of the third channel state information, and other layers do not need to feed back the third channel state information, the terminal may acquire the third channel state information only according to the channel state information on the part of layers of the second channel state information. For example, the channel state information on the part of layers of the second channel state information used to determine the third channel state information includes one of: channel state information on layers with a relatively high signal-to-noise ratio (SNR), channel state information on the first layer, channel state information on the layer indicated by the LI, channel state information on layers with a performance metric greater than a threshold, or channel state information on layers indicated by the higher-layer signaling.

In another example, the above part of the second channel state information includes second channel state information corresponding to part of ports.

The part of ports is determined based on at least one of: higher-layer signaling, evaluation information of the second channel state information, a signal-to-noise ratio, or a predefined port. The predefined port may be a first port group or other possible ports.

Exemplarily, in a case where only part of ports needs enhanced feedback of the third channel state information, and other ports do not need to feed back the third channel state information, the terminal may acquire the third channel state information only according to the channel state information on the part of ports of the second channel state information. For example, the channel state information on the part of ports of the second channel state information used to determine the third channel state information includes one of: channel state information on a first port group, channel state information on a port group indicated by the higher-layer signaling, channel state information on ports with a performance metric greater than a threshold value, or channel state information on ports with an SNR greater than a threshold value.

In yet another example, the part of the second channel state information includes second channel state information corresponding to part of resource blocks (PRBs).

The part of resource blocks is determined based on at least one of: higher-layer signaling, evaluation information of the second channel state information, a signal-to-noise ratio, or a predefined resource block. The predefined resource block may be a first frequency-domain PRB group or other possible PRBs. In addition, in the present disclosure, the second channel state information corresponding to the part of resource blocks may include second state information corresponding to reference signals on one or more time-domain transmission resources and/or frequency-domain transmission resources, such as second channel state information on part of subbands, part of PRBs, or part of symbols.

Exemplarily, in a case where only part of resource blocks needs enhanced feedback of the third channel state information, and other resource block groups do not need to feed back the third channel state information, the terminal may acquire the third channel state information only according to the channel state information on part of PRB groups of the second channel state information. For example, the channel state information on the part of PRB groups of the second channel state information used to determine the third channel state information includes one of: channel state information on a first frequency-domain PRB group, channel state information on a frequency domain group indicated by the higher-layer signaling, channel state information on PRB groups with a performance metric greater than a threshold value, or channel state information on PRB groups with an SNR greater than a threshold value.

In some embodiments, the terminal may also acquire a performance metric of the second channel state information; and as shown in FIG. 3, a determination mode of the third channel state information may be implemented as step SA1 to step SA3 as follows, for example.

In SA1, a performance metric is acquired according to the second channel state information.

Exemplarily, the terminal, before acquiring the third channel state information, may first acquire a performance metric according to the second channel state information, which may also be understood as acquiring a performance metric of the second channel state information, and determining, based on the performance metric, whether to further determine the third channel state information based on the all or part of the second channel state information.

In some embodiments, the performance metric of the second channel state information may be used to measure a similarity between the channel information H and the first channel state information C1, that is, an accuracy of characterizing the channel information H with the first channel state information. In an example, a performance metric may be calculated according to the differential channel state information H-C1; in an example, the performance metric is determined based on a sum of absolute values of each element of H-C1; in an example, the performance metric is determined based on a maximum value of the absolute values of each element of H-C1; in an example, the performance metric is determined based on an average value of the absolute values of each element of H-C1; in an example, the performance metric is determined based on a minimum value of the absolute values of each element of H-C1 and in an example, the performance metric is determined based on a linear combination of the absolute values of each element of H-C1, etc.

Thus, whether to acquire the third channel state information may be determined according to a value of the performance metric. A smaller value of the performance metric indicates a greater similarity between the channel information H and the first channel state information C1, that is, C1 is more similar to H, and it is less necessary to feed back the third channel state information. When the performance metric is greater than or equal to the preset threshold, the third channel state information is not acquired or the following step SA2 is performed; otherwise, the third channel state information is acquired or the following step SA3 is performed.

In addition, the performance metric of the second channel state information may also be used to measure a sparsity degree of H-C1. A smaller value of the performance metric indicates that H-C1 is sparser, that is, it is easier to obtain channel state information with better performance through processing methods such as AI, so that the third channel state information may be obtained with AI at a smaller feedback overhead. Thus, in a case where the performance metric of the second channel state information is less than the preset threshold, the third channel state information is acquired according to the second channel state information.

In SA2, in a case where the performance metric of the second channel state information is greater than or equal to a preset threshold, the third channel state information is determined as null.

In SA3, in a case where the performance metric of the second channel state information is less than a preset threshold, the third channel state information is acquired according to the all or part of the second channel state information.

In some examples, the performance metric is sent.

In some examples, a second performance metric may be determined according to the second channel state information, a larger second performance metric indicates that the first channel state information is more similar to the channel information, and in this case, in a case where the performance metric is greater than equal to the preset threshold, the third channel state information is acquired according to the all or part of the second channel state information; and in a case where the performance metric is less than the preset threshold, the third channel state information is null. In some examples, the third channel state information is null, which indicates that it is unnecessary to acquire the third channel state information according to the second channel state information. Nor is it necessary to feed back the third channel state information.

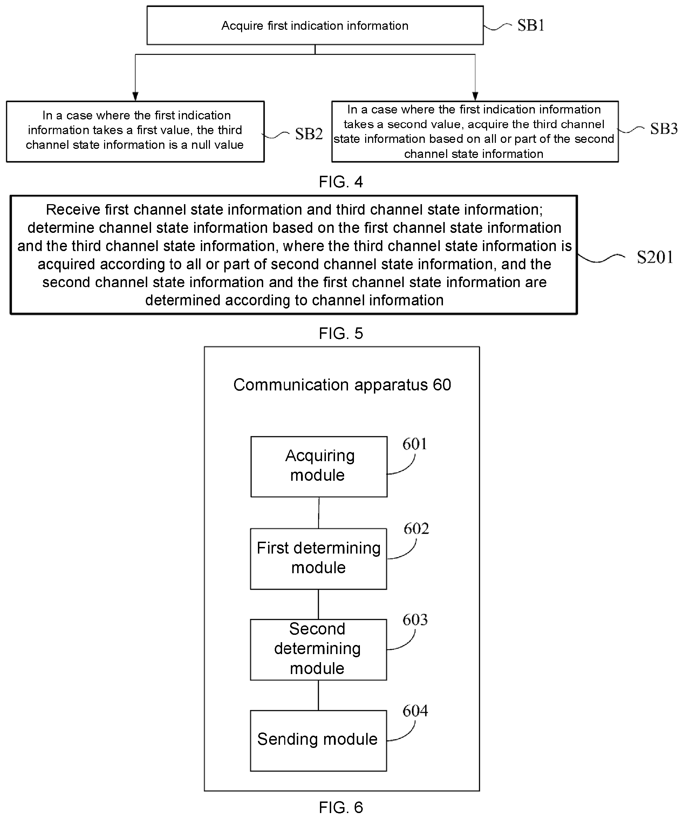

In some embodiments, the terminal may also acquire first indication information and as shown in FIG. 4, a determination mode of the third channel state information may be implemented as step SB1 to step SB3 as follows, for example.

In SB1, first indication information is acquired.

The first indication information is used to indicate whether to further determine the third channel state information based on the second channel state information. Exemplarily, the terminal, before acquiring the third channel state information, receives the first indication information from the base station. Further, whether to acquire the third channel state information is determined according to a value of the first indication information.

In some embodiments, the base station may determine, whether the terminal needs to feed back the third channel state information again according to a scheduling condition and a service state. In an example, in a case where the first indication information takes a first value, it indicates that the third channel state information does not need to be acquired at this case. Conversely, in a case where the first indication information takes a second value, it indicates that the third channel state information needs to be acquired at this case. Here, the first value and the second value are two different values, for example, the first value may be a non-zero value, and the second value is zero, such as the first value being TRUE and the second value being FALSE.

In SB2, in a case where the first indication information takes a first value, the third channel state information is null.

In SB3, in a case where the first indication information takes a second value, the third channel state information is acquired based on the all or part of the second channel state information.

In S104, the first channel state information and the third channel state information are sent.

In some embodiments, the first channel state information and the third channel state information are sent on a channel state information (CSI) report.

In some embodiments, the first channel state information and the third channel state information are sent on at least two channel state information (CSI) reports.

In some embodiments, the above at least two CSI reports are sent on at least two slots.

Exemplarily, the above two CSI reports are transmitted on different transmission resources, for example, a CSI report is transmitted on a physical uplink control channel (PUCCH), and the other CSI report is transmitted on a physical uplink shared channel (PUSCH). Alternatively, both CSI reports are transmitted on the PUCCH, or both CSI reports are transmitted on the PUSCH.

Exemplarily, in an actual sending process, only the first channel state information or the third channel state information may be sent. For example, when the third channel state information is null, only the first channel state information is sent. In an example, if the first channel state information has already been sent in another CSI report, or the base station has already obtained the first channel state information through reciprocity of the uplink channel, then only the third channel state information needs to be sent. In an example, a sending period of the CSI report corresponding to the first channel state information may be different from a period of the CSI report corresponding to the third channel state information. For example, the sending period of the CSI report corresponding to the first channel state information is greater than the period of the CSI report corresponding to the third channel state information, in this case, a plurality of pieces of third channel state information at different times may be generated based on same first channel state information. For example, the third channel state information on the 1st slot, 2nd slot, ..., Kth slot is respectively generated based on the channel information H₁, channel information H₂, ..., channel information H_{K} on the 1st slot, 2nd slot, ..., Kth slot and the same first channel state information C1, that is, respectively H₁-C1, H₂-C1, ..., H_{K}-C1. For another example, the sending period of the CSI report corresponding to the first channel state information is less than the period of the CSI report corresponding to the third channel state information.

Based on the technical solutions provided in the present disclosure, the first channel state information is determined, the second channel state information may also be determined based on the first channel state information and/or the channel information, and the third channel state information is further determined. Thus, the first channel state information and the third channel state information may be fed back, so as to improve the accuracy of the transmitted channel state information.

In some embodiments, the channel information may be acquired, and only the first channel state information is determined according to the channel information. Further, the first channel state information is sent.

In some embodiments, the first channel state information includes L layers of first channel state information, L is a positive integer, and the first channel state information satisfies at least one of:
a number of quantization bits of first channel state information corresponding to at least one layer among the L layers being greater than or equal to a number of quantization bits of first channel state information corresponding to other layers;
a frequency-domain basis vector length of the first channel state information corresponding to at least one layer among the L layers being greater than or equal to a frequency-domain basis vector length of the first channel state information corresponding to other layers;
a number of frequency-domain basis vectors of the first channel state information corresponding to at least one layer among the L layers being greater than or equal to a number of frequency-domain basis vectors of the first channel state information corresponding to other layers;
a length of a time-domain basis vector of the first channel state information corresponding to at least one layer among the L layers being greater than or equal to a length of a time-domain basis vector of the first channel state information corresponding to other layers;
a number of time-domain basis vectors of the first channel state information corresponding to at least one layer among the L layers being greater than or equal to a number of time-domain basis vectors of the first channel state information corresponding to other layers;
a length of a spatial-domain basis vector of the first channel state information corresponding to at least one layer among the L layers being greater than or equal to a length of a spatial-domain basis vector of the first channel state information corresponding to other layers; or
a number of spatial-domain basis vectors of the first channel state information corresponding to at least one layer among the L layers being greater than or equal to a number of spatial-domain basis vectors of the first channel state information corresponding to other layers.

In some embodiments, the present disclosure further provides a channel state information receiving method, and as shown in FIG. 5, the method includes: S201.

In S201, first channel state information and third channel state information are received. Channel state information is determined based on the first channel state information and the third channel state information, where the third channel state information is acquired according to all or part of second channel state information, and the second channel state information and the first channel state information are determined according to the channel information.

In some embodiments, the second channel state information is determined according to the channel information and the first channel state information.

In some embodiments, the second channel state information is determined according to a difference between the channel information and the first channel state information.

In a possible implementation, the third channel state information is determined according to a first information processing mode and the all or part of the second channel state information.

In an example, the channel state information is a sum of the first channel state information and the third channel state information. For example, the channel state information is a sum of a matrix used to describe the first channel state information and a matrix used to describe the third channel state information.

In an example, channel state information on part of layers is a sum of the first channel state information and the third channel state information on the part of layers, and channel state information on other layers is the first channel state information. In an example, the channel state information on part of ports is a sum of the first channel state information and the third channel state information on the part ports, and the channel state information on other ports is the first channel state information. In an example, the channel state information on part of resource blocks is a sum of the first channel state information and the third channel state information on the part of resource blocks, and the channel state information on other resource blocks is the first channel state information.

The first information processing mode is a linear processing mode.

In some embodiments, the first information processing mode may include any one of: a singular value decomposition-based mode, an eigenvalue decomposition-based mode, a projection-based mode, or a mode for generating a codeword based on at least one discrete Fourier transform vector.

In another possible implementation, the third channel state information is determined according to a second information processing mode and the all or part of the second channel state information.

In some embodiments, the second information processing mode is a nonlinear processing mode.

In some embodiments, the second information processing mode may include any one of: an artificial intelligence-based nonlinear processing mode, a dirty paper coding-based nonlinear processing mode, a functionality-based nonlinear processing mode, a function-based nonlinear processing mode, a mapping-based nonlinear processing mode, or a model-based nonlinear processing mode.

In some embodiments, the first channel state information and the third channel state information are sent on a channel state information (CSI) report.

In some embodiments, the first channel state information and the third channel state information are sent on at least two channel state information (CSI) reports. In some embodiments, the at least two CSI reports are sent on at least two slots.

In some embodiments, a performance metric of the second channel state information may also be received.

In a case where the performance metric of the second channel state information is greater than or equal to a preset threshold, the third channel state information is determined as null. Alternatively, in a case where the performance metric of the second channel state information is less than the preset threshold, the third channel state information is acquired according to the all or part of the second channel state information.

In some embodiments, before receiving the first channel state information and the third channel state information, the channel state information receiving method further includes:
sending first indication information.

In a case where the first indication information takes a first value, the third channel state information is null. Alternatively, in a case where the first indication information takes a second value, the third channel state information is acquired according to the all or part of the second channel state information.

In some embodiments, the third channel state information is acquired according to the part of the second channel state information.

In an example, the above part of the second channel state information includes second channel state information corresponding to part of layers.

The part of layers is determined according to at least one of: higher-layer signaling, evaluation information of the second channel state information, a signal-to-noise ratio, or a predefined layer.

In another example, the above part of the second channel state information includes second channel state information corresponding to part of ports.

The part of ports is determined based on at least one of: higher-layer signaling, evaluation information of the second channel state information, a signal-to-noise ratio, or a predefined port.

In yet another example, the above part of the second channel state information includes second channel state information corresponding to part of resource blocks.

The part of resource blocks is determined based on at least one of: higher-layer signaling, evaluation information of the second channel state information, a signal-to-noise ratio, or a predefined resource block.

In some embodiments, the first channel state information includes L layers of first channel state information, L is a positive integer, and the first channel state information satisfies at least one of:
a number of quantization bits of first channel state information corresponding to at least one layer among the L layers being greater than or equal to a number of quantization bits of first channel state information corresponding to other layers;
a length of a frequency-domain basis vector of the first channel state information corresponding to at least one layer among the L layers being greater than or equal to a length of a frequency-domain basis vector of the first channel state information corresponding to other layers;
a number of frequency-domain basis vectors of the first channel state information corresponding to at least one layer among the L layers being greater than or equal to a number of frequency-domain basis vectors of the first channel state information corresponding to other layers;
a length of a time-domain basis vector of the first channel state information corresponding to at least one layer among the L layers being greater than or equal to a length of a time-domain basis vector of the first channel state information corresponding to other layers;
a number of time-domain basis vectors of the first channel state information corresponding to at least one layer among the L layers being greater than or equal to a number of time-domain basis vectors of the first channel state information corresponding to other layers;
a length of a spatial-domain basis vector of the first channel state information corresponding to at least one layer among the L layers being greater than or equal to a length of a spatial-domain basis vector of the first channel state information corresponding to other layers; or
a number of spatial-domain basis vectors of the first channel state information corresponding to at least one layer among the L layers being greater than or equal to a number of spatial-domain basis vectors of the first channel state information corresponding to other layers.

In some embodiments, the third channel state information includes M layers of third channel state information, M is a positive integer, and the third channel state information satisfies at least one of:
a number of quantization bits of third channel state information corresponding to at least one layer among the M layers being greater than or equal to a number of quantization bits of third channel state information corresponding to other layers;
a length of a frequency-domain basis vector of the third channel state information corresponding to at least one layer among the M layers being greater than or equal to a length of a frequency-domain basis vector of the third channel state information corresponding to other layers;
a number of frequency-domain basis vectors of the third channel state information corresponding to at least one layer among the M layers being greater than or equal to a number of frequency-domain basis vectors of the third channel state information corresponding to other layers;
a length of a time-domain basis vector of the third channel state information corresponding to at least one layer among the M layers being greater than or equal to a length of a time-domain basis vector of the third channel state information corresponding to other layers;
a number of time-domain basis vectors of the third channel state information corresponding to at least one layer among the M layers being greater than or equal to a number of time-domain basis vectors of the third channel state information corresponding to other layers;
a length of a spatial-domain basis vector of the third channel state information corresponding to at least one layer among the M layers being greater than or equal to a length of a spatial-domain basis vector of the third channel state information corresponding to other layers; or
a number of spatial-domain basis vectors of the third channel state information corresponding to at least one layer among the M layers being greater than or equal to a number of spatial-domain basis vectors of the third channel state information corresponding to other layers.

In addition, for a detailed description of step S201, reference may also be made to the relevant descriptions of the above step S101 to step S104, which will not be repeated herein.

The above introduces the solutions provided by the present disclosure mainly from the perspective of interaction between various communication nodes. It can be understood that, in order to implement the above functions, various communication nodes contain corresponding hardware structures and/or software modules for performing various functions. Those skilled in the art should easily realize that the present disclosure can be implemented in the form of hardware or a combination of hardware and computer software, in combination with the algorithm steps of various examples described in the embodiments disclosed herein. Whether a certain function is performed by hardware or by computer software driving hardware, depends on a specific application and a design constraint condition of the technical solution. Professional technicians may use different methods to implement the described functions for each specific application, but these implementations should not be considered beyond the scope of the present disclosure.

FIG. 6 illustrates a schematic diagram of components of a communication apparatus, provided in the embodiments of the present disclosure. As shown in FIG. 6, the communication apparatus 60 includes an acquiring module 601, a first determining module 602, a second determining module 603, and a sending module 604.

The acquiring module 601, is configured to acquire channel information.

The first determining module 602, is configured to determine first channel state information and second channel state information according to the channel information.

The second determining module 603, is configured to acquire third channel state information according to all or part of the second channel state information.

The sending module 604, is configured to send the first channel state information and the third channel state information.

In some embodiments, the first determining module 602, may be configured to determine the first channel state information according to the channel information; and determine the second channel state information according to the channel information and/or the first channel state information.

In some embodiments, the first determining module 602, may be configured to determine the second channel state information according to a difference between the channel information and the first channel state information.

In some embodiments, the second determining module 603, may be configured to determine the third channel state information according to a first information processing mode and the all or part of the second channel state information.

In some embodiments, the first information processing mode is a linear processing mode, and includes any one of: a singular value decomposition-based mode, an eigenvalue decomposition-based mode, a projection-based mode, or a mode for generating a codeword based on at least one discrete Fourier transform vector.

In some embodiments, acquiring the third channel state information according to the all or part of the second channel state information includes: determining the third channel state information according to a second information processing mode and the all or part of the second channel state information

In some embodiments, the second information processing mode is a nonlinear processing mode, and includes any one of: an artificial intelligence-based nonlinear processing mode, a dirty paper coding-based nonlinear processing mode, a functionality-based nonlinear processing mode, a function-based nonlinear processing mode, a mapping-based nonlinear processing mode, or a model-based nonlinear processing mode.

In some embodiments, the sending module 604, may be configured to send the first channel state information and/or the third channel state information on a channel state information (CSI) report.

In some embodiments, the sending module 604, may be configured to send the first channel state information and the third channel state information on at least two channel state information (CSI) reports. For example, a CSI report sends the first channel state information, and a CSI report sends the third channel state information.

In some embodiments, the at least two CSI reports are sent on at least two slots.

In some embodiments, the second determining module 603, may be configured to acquire a performance metric according to the second channel state information; in a case where the performance metric is greater than or equal to a preset threshold, determine that the third channel state information is null; in a case where the performance metric of the second channel state information is less than a preset threshold, acquire the third channel state information according to the all or part of the second channel state information; and the sending module 604, is further configured to send the performance metric. In an example, there is also a sending module 605, configured to send the performance metric.

In some embodiments, the second determining module 603, may be configured to: acquire first indication information; in a case where the first indication information takes a first value, the third channel state information is null; and in a case where the first indication information takes a second value, acquire the third channel state information according to the all or part of the second channel state information.

In some embodiments, the third channel state information is acquired according to the part of the second channel state information.

In some embodiments, the above part of the second channel state information includes second channel state information corresponding to part of layers; where the part of layers is determined according to at least one of: higher-layer signaling, evaluation information of the second channel state information, a signal-to-noise ratio, or a predefined layer.

In some embodiments, the above part of the second channel state information includes second channel state information corresponding to part of ports; where the part of ports is determined based on at least one of: higher-layer signaling, evaluation information of the second channel state information, a signal-to-noise ratio, or a predefined port.

In some embodiments, the above part of the second channel state information includes second channel state information corresponding to part of resource blocks; where the part of resource blocks is determined based on at least one of: higher-layer signaling, evaluation information of the second channel state information, a signal-to-noise ratio, or a predefined resource block.

In some embodiments, the first channel state information includes L layers of first channel state information, L is a positive integer, and the first channel state information satisfies at least one of:
a number of quantization bits of first channel state information corresponding to at least one layer among the L layers being greater than or equal to a number of quantization bits of first channel state information corresponding to other layers;
a length of a frequency-domain basis vector of the first channel state information corresponding to at least one layer among the L layers being greater than or equal to a length of a frequency-domain basis vector of the first channel state information corresponding to other layers;
a number of frequency-domain basis vectors of the first channel state information corresponding to at least one layer among the L layers being greater than or equal to a number of frequency-domain basis vectors of the first channel state information corresponding to other layers;
a length of a time-domain basis vector of the first channel state information corresponding to at least one layer among the L layers being greater than or equal to a length of a time-domain basis vector of the first channel state information corresponding to other layers;
a number of time-domain basis vectors of the first channel state information corresponding to at least one layer among the L layers being greater than or equal to a number of time-domain basis vectors of the first channel state information corresponding to other layers;
a length of a spatial-domain basis vector of the first channel state information corresponding to at least one layer among the L layers being greater than or equal to a length of a spatial-domain basis vector of the first channel state information corresponding to other layers; or
a number of spatial-domain basis vectors of the first channel state information corresponding to at least one layer among the L layers being greater than or equal to a number of spatial-domain basis vectors of the first channel state information corresponding to other layers.

In some embodiments, the third channel state information includes M layers of third channel state information, M is a positive integer, and the third channel state information satisfies at least one of:
a number of quantization bits of third channel state information corresponding to at least one layer among the M layers being greater than or equal to a number of quantization bits of third channel state information corresponding to other layers;
a length of a frequency-domain basis vector of the third channel state information corresponding to at least one layer among the M layers being greater than or equal to a length of a frequency-domain basis vector of the third channel state information corresponding to other layers;
a number of frequency-domain basis vectors of the third channel state information corresponding to at least one layer among the M layers being greater than or equal to a number of frequency-domain basis vectors of the third channel state information corresponding to other layers;
a length of a time-domain basis vector of the third channel state information corresponding to at least one layer among the M layers being greater than or equal to a length of a time-domain basis vector of the third channel state information corresponding to other layers;
a number of time-domain basis vectors of the third channel state information corresponding to at least one layer among the M layers being greater than or equal to a number of time-domain basis vectors of the third channel state information corresponding to other layers;
a length of a spatial-domain basis vector of the third channel state information corresponding to at least one layer among the M layers being greater than or equal to a length of a spatial-domain basis vector of the third channel state information corresponding to other layers; or
a number of spatial-domain basis vectors of the third channel state information corresponding to at least one layer among the M layers being greater than or equal to a number of spatial-domain basis vectors of the third channel state information corresponding to other layers.

For more detailed descriptions of the above acquiring module 601, the first determining module 602, the second determining module 603, and more detailed descriptions of various technical features therein, and descriptions of the beneficial effects, etc., references may be made to the above corresponding method embodiment sections, which will not be repeated herein.

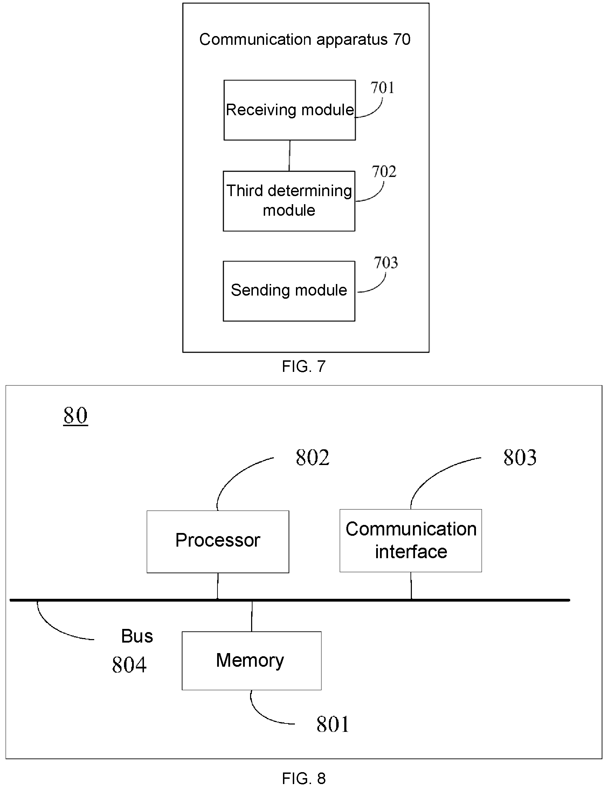

FIG. 7 illustrates a schematic diagram of components of a communication apparatus, provided in the embodiments of the present disclosure. As shown in FIG. 7, the communication apparatus 70 includes a receiving module 701, a third determining module 702, and a sending module 703.

The receiving module 701, is configured to receive first channel state information and third channel state information. The third determining module 702, is configured to determine channel state information according to the first channel state information and the third channel state information. The third channel state information is acquired according to all or part of second channel state information, and the second channel state information is determined according to the channel information and the first channel state information.

In some embodiments, the receiving module 701, is configured to receive first channel information. Alternatively, the receiving module 701, is configured to receive third channel information.

In some embodiments, the second channel state information is determined according to the channel information and/or the first channel state information.

In some embodiments, the second channel state information is determined according to a difference between the channel information and the first channel state information.

In some embodiments, the third channel state information is determined according to a first information processing mode and the all or part of the second channel state information.

In some embodiments, the first information processing mode is a linear processing mode, and includes any one of: a singular value decomposition-based mode, an eigenvalue decomposition-based mode, a projection-based mode, or a mode for generating a codeword based on at least one discrete Fourier transform vector.

In some embodiments, the third channel state information is determined according to a second information processing mode and the all or part of the second channel state information.

In some embodiments, the second information processing mode is a nonlinear processing mode, and includes any one of: an artificial intelligence-based nonlinear processing mode, a dirty paper coding-based nonlinear processing mode, a functionality-based nonlinear processing mode, a function-based nonlinear processing mode, a mapping-based nonlinear processing mode, or a model-based nonlinear processing mode.

In some embodiments, the receiving module 701, may be configured to receive the first channel state information and/or the third channel state information on a channel state information (CSI) report.

In some embodiments, the receiving module 701, may be configured to receive the first channel state information and the third channel state information on at least two channel state information (CSI) reports. For example, a CSI report receives the first channel state information, and a CSI report receives the third channel state information.

In some embodiments, the at least two CSI reports are received on at least two slots.

In some embodiments, the receiving module 701, is further configured to receive a performance metric of the second channel state information.

In a case where the performance metric of the second channel state information is greater than or equal to a preset threshold, the third channel state information is null or the third channel state information is the second channel state information. Alternatively, in a case where the performance metric of the second channel state information is less than the preset threshold, the third channel state information is acquired according to the all or part of the second channel state information.

In some embodiments, the sending module 703, is further configured to: send first indication information before receiving the first channel state information and the third channel state information. In an example, there is also a sending module 704, and the sending module 704, is configured to send the first indication information.

In a case where the first indication information takes a first value, the third channel state information is null. Alternatively, in a case where the first indication information takes a second value, the third channel state information is acquired according to the all or part of the second channel state information.

In some embodiments, the third channel state information is acquired according to the part of the second channel state information.

In some embodiments, the above part of the second channel state information includes second channel state information corresponding to part of layers; where the part of layers is determined according to at least one of: higher-layer signaling, evaluation information of the second channel state information, a signal-to-noise ratio, or a predefined layer.

In some embodiments, the above part of the second channel state information includes second channel state information corresponding to part of ports; where the part of ports is determined based on at least one of: higher-layer signaling, evaluation information of the second channel state information, a signal-to-noise ratio, or a predefined port.

In some embodiments, the above part of the second channel state information includes second channel state information corresponding to part of resource blocks; where the part of resource blocks is determined based on at least one of: higher-layer signaling, evaluation information of the second channel state information, a signal-to-noise ratio, or a predefined resource block.

In some embodiments, the first channel state information includes L layers of first channel state information, L is a positive integer, and the first channel state information satisfies at least one of:
a number of quantization bits of first channel state information corresponding to at least one layer among the L layers being greater than or equal to a number of quantization bits of first channel state information corresponding to other layers;
a length of a frequency-domain basis vector of the first channel state information corresponding to at least one layer among the L layers being greater than or equal to a length of a frequency-domain basis vector of the first channel state information corresponding to other layers;
a number of frequency-domain basis vectors of the first channel state information corresponding to at least one layer among the L layers being greater than or equal to a number of frequency-domain basis vectors of the first channel state information corresponding to other layers;
a length of a time-domain basis vector of the first channel state information corresponding to at least one layer among the L layers being greater than or equal to a length of a time-domain basis vector of the first channel state information corresponding to other layers;
a number of time-domain basis vectors of the first channel state information corresponding to at least one layer among the L layers being greater than or equal to a number of time-domain basis vectors of the first channel state information corresponding to other layers;
a length of a spatial-domain basis vector of the first channel state information corresponding to at least one layer among the L layers being greater than or equal to a length of a spatial-domain basis vector of the first channel state information corresponding to other layers; or
a number of spatial-domain basis vectors of the first channel state information corresponding to at least one layer among the L layers being greater than or equal to a number of spatial-domain basis vectors of the first channel state information corresponding to other layers.

In some embodiments, the third channel state information includes M layers of third channel state information, M is a positive integer, and the third channel state information satisfies at least one of:
a number of quantization bits of third channel state information corresponding to at least one layer among the M layers being greater than or equal to a number of quantization bits of third channel state information corresponding to other layers;
a length of a frequency-domain basis vector of the third channel state information corresponding to at least one layer among the M layers being greater than or equal to a length of a frequency-domain basis vector of the third channel state information corresponding to other layers;
a number of frequency-domain basis vectors of the third channel state information corresponding to at least one layer among the M layers being greater than or equal to a number of frequency-domain basis vectors of the third channel state information corresponding to other layers;
a length of a time-domain basis vector of the third channel state information corresponding to at least one layer among the M layers being greater than or equal to a length of a time-domain basis vector of the third channel state information corresponding to other layers;
a number of time-domain basis vectors of the third channel state information corresponding to at least one layer among the M layers being greater than or equal to a number of time-domain basis vectors of the third channel state information corresponding to other layers;
a length of a spatial-domain basis vector of the third channel state information corresponding to at least one layer among the M layers being greater than or equal to a length of a spatial-domain basis vector of the third channel state information corresponding to other layers; or
a number of spatial-domain basis vectors of the third channel state information corresponding to at least one layer among the M layers being greater than or equal to a number of spatial-domain basis vectors of the third channel state information corresponding to other layers.

For more detailed descriptions of the above receiving module 701, the third determining module 702, and the sending module 703, and more detailed descriptions of various technical features therein, and descriptions of the beneficial effects, etc., references may be made to the above corresponding method embodiment sections, which will not be repeated herein.

It should be noted that, the modules in FIG. 6 or FIG. 7 may also be referred to as units and for example, the sending module may be referred to as a sending unit. In addition, in the embodiments shown in FIG. 6 and FIG. 7, the names of the various modules may not be the names shown in the figures, and for example, the sending module may also be referred to as a communication module, and the receiving module may also be referred to as a communication module.

If the respective units or modules in FIG. 6 or FIG. 7 are implemented in the form of a software functional module, and sold or used as an independent product, the respective units may be stored in a computer readable storage medium. Based on this understanding, the technical solutions of the embodiments of the present disclosure may be essentially, or a part of the technical solutions that contributes to the existing technology, or all or a part of the technical solutions, may be embodied in the form of a software product, and the computer software product is stored in a storage medium, and includes a plurality of instructions to cause a computer device (which may be a personal computer, a server, or a network device, etc.) or processor to perform all or a part of the steps of the methods of various embodiments of the present disclosure. The storage medium storing the computer software product includes various types of medium capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure provide a structural schematic diagram of a communication apparatus, the communication apparatus may be the above communication apparatus 60 or communication apparatus 70. As shown in FIG. 8, the communication apparatus 80 includes a processor 802, a communication interface 803, and a bus 804. In some embodiments, the communication apparatus 80 may also include a memory 801.

The processor 802 may implement or perform various exemplary logical blocks, modules and circuits described in conjunction with the content disclosed in the present disclosure. The processor 802 may be a central processing unit, a general-purpose processor, a digital signal processor, an application specific integrated circuit, a field programmable gate array or any other programmable logic device, a transistor logic device, a hardware component, or any combination thereof, which may implement or execute various illustrative logical blocks, modules and circuits described in conjunction with the contents of the present disclosure. The processor 802 may also be a combination that implements computing functions, for example, containing a combination of one or more microprocessors, a combination of a digital signal processor (DSP) and a microprocessor, or the like.

The communication interface 803 is configured to connect with other devices via a communication network. The communication network may be an Ethernet, a radio access network, a wireless local area network (WLAN), or the like.

The memory 801 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 801 may exist independently of the processor 802, and the memory 801 may be connected to the processor 802 via the bus 804 and is used for storing instructions or program codes. The processor 802, when calling and executing the instructions or program codes stored in the memory 801, is capable of implementing the method provided in the embodiments of the present disclosure.

As another possible implementation, the memory 801 may also be integrated with the processor 802.

The bus 804 may be an extended industry standard architecture (EISA) bus or the like. Buses 804 may be divided into address buses, data buses, control buses, and the like. For ease of representation, only one bold line is used for the representation in FIG. 8, but it does not mean that there is only one bus or one type of the bus.

From the description of the above embodiments, those skilled in the art can clearly understand that, for convenience and brevity of description, an illustration is only given by the division of above functional modules. In practical applications, the above functions may be allocated to be completed by different functional modules according to requirements. That is, the internal structure of the device or apparatus is divided into different functional modules to complete all or a part of the above functions.

The embodiments of the present disclosure further provide a computer readable storage medium (e.g., including a non-transitory computer readable storage medium). All or a part of the procedures in the above method embodiments may be completed by related hardware indicated by computer instructions, and the program may be stored in the above computer readable storage medium. The program, upon being executed, may include the procedures of the above method embodiments. The computer readable storage medium may be an internal storage unit or memory of the device or apparatus of any of the foregoing embodiments. The above computer readable storage medium may also be an external storage device of the device or apparatus mentioned above, e.g., a plug-in hard disk, a smart memory card (smart media card, SMC), a secure digital (SD) card, a flash card, etc., equipped on the above device or apparatus. Furthermore, the above computer readable storage medium may further include both an internal storage unit and an external storage device of the above device or apparatus. The above computer readable storage medium is used to store the above computer program, and other programs and data required for the above device or apparatus. The above computer readable storage medium may also be used to temporarily store data that has been output or is to be output.

The embodiments of the present disclosure further provide a computer program product, the computer product contains a computer program, the computer program product, when executed on a computer, causes the computer to perform any one of the methods provided in the above embodiments.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with some features and embodiments thereof, it is apparent that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents within the scope of the present disclosure. Obviously, those skilled in the art may make various modifications and variants to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

## Claims

1. A channel state information sending method, **characterized by** comprising:
acquiring channel information;
determining first channel state information and second channel state information according to the channel information;
acquiring third channel state information according to all or part of the second channel state information; and
sending the first channel state information and the third channel state information.

2. The method according to claim 1, wherein determining the first channel state information and the second channel state information according to the channel information, comprises:
determining the first channel state information according to the channel information; and
determining the second channel state information according to the channel information and/or the first channel state information.

3. The method according to claim 2, wherein determining the second channel state information according to the channel information and/or the first channel state information, comprises:
determining the second channel state information according to a difference between the channel information and the first channel state information.

4. The method according to claim 1, wherein acquiring the third channel state information according to the all or part of the second channel state information, comprises:
determining the third channel state information according to a first information processing mode and the all or part of the second channel state information.

5. The method according to claim 4, wherein the first information processing mode is a linear processing mode, and comprises any one of: a singular value decomposition-based mode, an eigenvalue decomposition-based mode, a projection-based mode, or a mode for generating a codeword based on at least one discrete Fourier transform vector.

6. The method according to claim 1, wherein acquiring the third channel state information according to the all or part of the second channel state information, comprises:
determining the third channel state information according to a second information processing mode and the all or part of the second channel state information.

7. The method according to claim 6, wherein the second information processing mode is a nonlinear processing mode, and comprises any one of: an artificial intelligence-based nonlinear processing mode, a dirty paper coding-based nonlinear processing mode, a functionality-based nonlinear processing mode, a function-based nonlinear processing mode, a mapping-based nonlinear processing mode, or a model-based nonlinear processing mode.

8. The method according to claim 1, wherein sending the first channel state information and the third channel state information, comprises:
sending the first channel state information and the third channel state information on at least two channel state information (CSI) reports; or
sending the first channel state information and/or the third channel state information on a channel state information (CSI) report.

9. The method according to claim 1, wherein acquiring the third channel state information according to the all or part of the second channel state information, comprises:
acquiring a performance metric according to the second channel state information;
in a case where the performance metric is greater than or equal to a preset threshold, determining that the third channel state information is null;
in a case where the performance metric is less than the preset threshold, acquiring the third channel state information according to the all or part of the second channel state information; and
sending the performance metric.

10. The method according to claim 1, wherein acquiring the third channel state information according to the all or part of the second channel state information, comprises:
acquiring first indication information;
in a case where the first indication information takes a first value, the third channel state information being null; and
in a case where the first indication information takes a second value, acquiring the third channel state information according to the all or part of the second channel state information.

11. The method according to claim 1, wherein the part of the second channel state information comprises second channel state information corresponding to part of layers.

12. The method according to claim 1, wherein the part of the second channel state information comprises second channel state information corresponding to part of ports.

13. The method according to claim 1, wherein the part of the second channel state information comprises second channel state information corresponding to part of resource blocks.

14. The method according to claim 1, wherein the first channel state information comprises L layers of first channel state information, L is a positive integer, and the first channel state information satisfies at least one of:
a number of quantization bits of first channel state information corresponding to at least one layer among the L layers being greater than or equal to a number of quantization bits of first channel state information corresponding to other layers;
a length of a frequency-domain basis vector of first channel state information corresponding to at least one layer among the L layers being greater than or equal to a length of a frequency-domain basis vector of first channel state information corresponding to other layers;
a number of frequency-domain basis vectors of first channel state information corresponding to at least one layer among the L layers being greater than or equal to a number of frequency-domain basis vectors of first channel state information corresponding to other layers;
a length of a time-domain basis vector of first channel state information corresponding to at least one layer among the L layers being greater than or equal to a length of a time-domain basis vector of first channel state information corresponding to other layers;
a number of time-domain basis vectors of first channel state information corresponding to at least one layer among the L layers being greater than or equal to a number of time-domain basis vectors of first channel state information corresponding to other layers;
a length of a spatial-domain basis vector of first channel state information corresponding to at least one layer among the L layers being greater than or equal to a length of a spatial-domain basis vector of first channel state information corresponding to other layers; or
a number of spatial-domain basis vectors of first channel state information corresponding to at least one layer among the L layers being greater than or equal to a number of spatial-domain basis vectors of first channel state information corresponding to other layers.

15. The method according to claim 1, wherein the third channel state information comprises third channel state information for M layers, M is a positive integer, and the third channel state information satisfies at least one of:
a number of quantization bits of third channel state information corresponding to at least one layer among the M layers being greater than or equal to a number of quantization bits of third channel state information corresponding to other layers;
a length of a frequency-domain basis vector of third channel state information corresponding to at least one layer among the M layers being greater than or equal to a length of a frequency-domain basis vector of third channel state information corresponding to other layers;
a number of frequency-domain basis vectors of third channel state information corresponding to at least one layer among the M layers being greater than or equal to a number of frequency-domain basis vectors of third channel state information corresponding to other layers;
a length of a time-domain basis vector of third channel state information corresponding to at least one layer among the M layers being greater than or equal to a length of a time-domain basis vector of third channel state information corresponding to other layers;
a number of time-domain basis vectors of third channel state information corresponding to at least one layer among the M layers being greater than or equal to a number of time-domain basis vectors of third channel state information corresponding to other layers;
a length of a spatial-domain basis vector of third channel state information corresponding to at least one layer among the M layers being greater than or equal to a length of a spatial-domain basis vector of third channel state information corresponding to other layers; or
a number of spatial-domain basis vectors of third channel state information corresponding to at least one layer among the M layers being greater than or equal to a number of spatial-domain basis vectors of third channel state information corresponding to other layers.

16. A channel state information receiving method, **characterized by** comprising:
receiving first channel state information and third channel state information; and
determining channel state information based on the first channel state information and the third channel state information, wherein the third channel state information is acquired according to all or part of second channel state information, and the second channel state information and the first channel state information are determined according to channel information.

17. The method according to claim 16, wherein the second channel state information is determined according to the channel information and/or the first channel state information.

18. The method according to claim 16, wherein the second channel state information is determined according to a difference between the channel information and the first channel state information.

19. The method according to claim 16, wherein the third channel state information is determined according to a first information processing mode and the all or part of the second channel state information.

20. The method according to claim 19, wherein the first information processing mode is a linear processing mode, and comprises any one of: a singular value decomposition-based mode, an eigenvalue decomposition-based mode, a projection-based mode, or a mode for generating a codeword based on at least one discrete Fourier transform vector.

21. The method according to claim 16, wherein the third channel state information is determined according to a second information processing mode and the all or part of the second channel state information.

22. The method according to claim 21, wherein the second information processing mode is a nonlinear processing mode, and comprises any one of: an artificial intelligence-based nonlinear processing mode, a dirty paper coding-based nonlinear processing mode, a functionality-based nonlinear processing mode, a function-based nonlinear processing mode, a mapping-based nonlinear processing mode, or a model-based nonlinear processing mode.

23. The method according to claim 16, wherein, before receiving the first channel state information and the third channel state information, the method further comprises:
receiving a performance metric of the second channel state information;
in a case where the performance metric of the second channel state information is greater than or equal to a preset threshold, the third channel state information being null; and
in a case where the performance metric of the second channel state information is less than the preset threshold, the third channel state information being acquired according to the all or part of the second channel state information.

24. The method according to claim 16, wherein, before receiving the first channel state information and the third channel state information, the method further comprises:
sending first indication information;
in a case where the first indication information takes a first value, indicating that the third channel state information is null; and
in a case where the first indication information takes a second value, indicating that the third channel state information is acquired according to the all or part of the second channel state information.

25. The method according to claim 16, wherein the part of the second channel state information comprises second channel state information corresponding to part of layers.

26. The method according to claim 16, wherein the part of the second channel state information comprises second channel state information corresponding to part of ports.

27. The method according to claim 16, wherein the part of the second channel state information comprises second channel state information corresponding to part of resource blocks.

28. The method according to claim 16, wherein the first channel state information comprises L layers of first channel state information, L is a positive integer, and the first channel state information satisfies at least one of:
a number of quantization bits of first channel state information corresponding to at least one layer among the L layers being greater than or equal to a number of quantization bits of first channel state information corresponding to other layers;
a length of a frequency-domain basis vector of first channel state information corresponding to at least one layer among the L layers being greater than or equal to a length of a frequency-domain basis vector of first channel state information corresponding to other layers;
a number of frequency-domain basis vectors of first channel state information corresponding to at least one layer among the L layers being greater than or equal to a number of frequency-domain basis vectors of first channel state information corresponding to other layers;
a length of a time-domain basis vector of first channel state information corresponding to at least one layer among the L layers being greater than or equal to a length of a time-domain basis vector of first channel state information corresponding to other layers;
a number of time-domain basis vectors of first channel state information corresponding to at least one layer among the L layers being greater than or equal to a number of time-domain basis vectors of first channel state information corresponding to other layers;
a length of a spatial-domain basis vector of first channel state information corresponding to at least one layer among the L layers being greater than or equal to a length of a spatial-domain basis vector of first channel state information corresponding to other layers; or
a number of spatial-domain basis vectors of first channel state information corresponding to at least one layer among the L layers being greater than or equal to a number of spatial-domain basis vectors of first channel state information corresponding to other layers.

29. The method according to claim 16, wherein the third channel state information comprises M layers of third channel state information, M is a positive integer, and the third channel state information satisfies at least one of:
a number of quantization bits of third channel state information corresponding to at least one layer among the M layers being greater than or equal to a number of quantization bits of third channel state information corresponding to other layers;
a length of a frequency-domain basis vector of third channel state information corresponding to at least one layer among the M layers being greater than or equal to a length of a frequency-domain basis vector of third channel state information corresponding to other layers;
a number of frequency-domain basis vectors of third channel state information corresponding to at least one layer among the M layers being greater than or equal to a number of frequency-domain basis vectors of third channel state information corresponding to other layers;
a length of a time-domain basis vector of third channel state information corresponding to at least one layer among the M layers being greater than or equal to a length of a time-domain basis vector of third channel state information corresponding to other layers;
a number of time-domain basis vectors of third channel state information corresponding to at least one layer among the M layers being greater than or equal to a number of time-domain basis vectors of third channel state information corresponding to other layers;
a length of a spatial-domain basis vector of third channel state information corresponding to at least one layer among the M layers being greater than or equal to a length of a spatial-domain basis vector of third channel state information corresponding to other layers; or
a number of spatial-domain basis vectors of third channel state information corresponding to at least one layer among the M layers being greater than or equal to a number of spatial-domain basis vectors of third channel state information corresponding to other layers.

30. A communication apparatus, **characterized by** comprising: a memory and a processor; the memory is coupled with the processor; the memory is configured to store instructions executable by the processor; and the processor, upon executing the instructions, performs the method according to any one of claims 1 to 29.

31. A computer readable storage medium, **characterized in that** the computer readable storage medium has stored computer instructions thereon, and the computer instructions, upon being executed on a communication apparatus, enable the communication apparatus to perform the method according to any one of claims 1 to 29.
